# EUROPEAN PATENT APPLICATION

(11) **EP 1 925 861 A2**
(43) Date of publication of application: **28.05.2008**
(21) Application number: 07116540.1
(22) Date of filing: 17.09.2007
(51) Int. Cl.: F16J 15/40, F16J 15/43, B23Q 11/08

(54) **Waterproof/dustproof structure**

(30) Priority: 22.11.2006 JP 2006315576
(71) Applicant: FANUC LTD, Minamitsuru-gun, Yamanashi 401-0597 (JP)
(72) Inventor: Kawai, Tomohiko c/o FANUC LTD., Minamitsuru-gun Jamanashi 401-0597 (JP); EBIHARA, Kenzo c/o FANUC LTD,, minamitsuru-gun Yamanashi 401-0597 (JP); Minami, Hiroshi c/o FANUC LTD., Minamitsuru-gun Yamanashi 401-0597 (JP)
(74) Representative: Thum, Bernhard

(57) **Abstract**

A waterproof/dustproof structure includes a stationary member defining a liquid reservoir, a movable member being separated by a gap region from the stationary member and moving without touching the stationary member, and a liquid of high viscosity contained in the liquid reservoir for sealing an entrance area to the gap region. With its high viscosity, the liquid can suppress vibration of the movable member when it stops moving.

## Description

### BACKGROUND OF THE INVENTION

### 1. Field of the Invention

The present invention relates to a waterproof/dustproof structure for an apparatus including a mechanism having a stationary member and a movable member, and more particularly to a waterproof/dustproof structure to be employed in an apparatus, such as a machine tool, having a mechanism requiring precise movement of the movable member.

### 2. Description of the Related Art

In a mechanism requiring precise movement of a movable member, such as a movable mechanism in a machine tool, it is desirable that the movable member be not in fixed contact with a stationary member so that its smooth movement is not disturbed. In this case, however, a gap exists between the stationary and movable members, which would allow a liquid, particles, and other foreign matter to get into the apparatus such as a machine tool. This means that there is a need to prevent the entry of foreign matter into the apparatus. A known waterproof/dustproof structure that effectively prevents the entry of liquid, particles, and other foreign matter into the apparatus through the gap between the stationary and movable members relies on a labyrinth structure with a finer gap between the stationary and movable members that are not in fixed contact with each other.

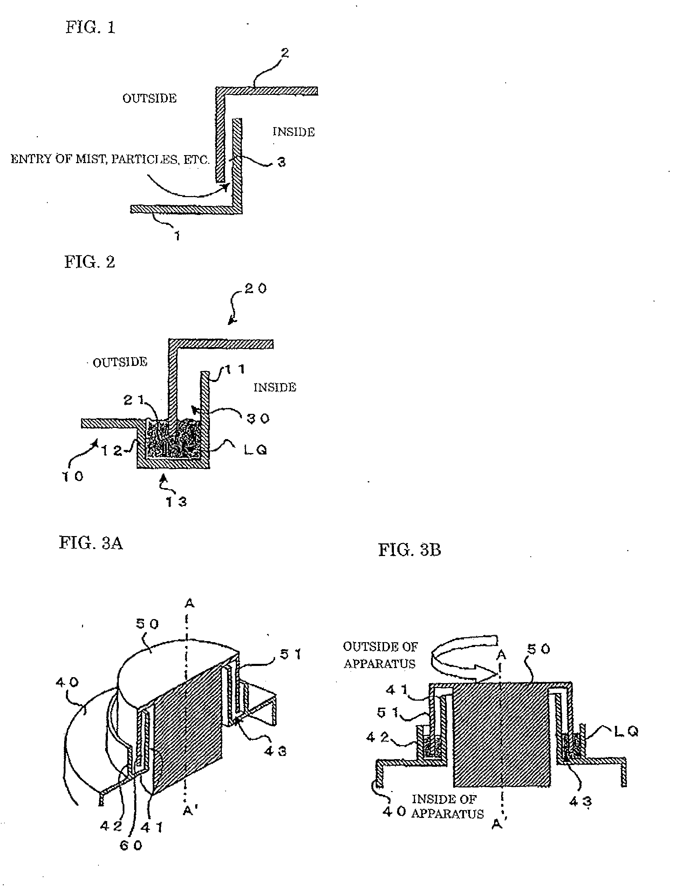

FIG. 1 shows a conventional labyrinth structure. In FIG. 1, a gap 3 is formed between a stationary member 1 and a movable member 2. The movable member 2 usually moves with respect to the stationary member 1 in a direction in which the gap 3 is maintained uniform, that is, (1) in the horizontal direction which is perpendicular to the plane of the drawing sheet, or (2) in the up-down direction along the plane of the drawing sheet. In some applications, however, it can also move in a combined direction of (1) and (2) (i.e., obliquely upward).

For such a labyrinth structure, in which the stationary member 1 and the movable member 2 are separated by a fine gap 3 and not permitted to touch each other, individual members (or their component parts) must be machined and assembled to precise tolerances. Even such a gap 3 would allow dust, water mist, and other foreign particles to get into the apparatus and contaminate its inside. Problems occasionally occurs when components of the mist or foreign particles attach to the inner wall part of the fine gap 3 and disturb the smooth movement of the movable member 2.

In view of this, a waterproof/dustproof structure as shown in FIG. 2 has been proposed in which a gap 30 is formed between a stationary member 10 and a movable member 20, a liquid reservoir 13 is defined by an inner wall part 11 and an outer wall part 12 of the stationary member 10 in an entrance area to the gap 30, and a liquid LQ is contained in the liquid reservoir 13, so that the movable member 20 can move with its lower end 21 being submerged in the liquid LQ. Because the liquid completely shields the inside of the apparatus from the outside, this waterproof/dustproof structure allows a wider gap between the stationary and movable members than the conventional labyrinth structure and offers an advantage that the stationary and movable members need not be machined and assembled to precise tolerances (refer to Japanese Patent Application Laid-Open No. 2006-266415, which will be referred to hereinafter as Patent Document 1).

### SUMMARY OF THE INVENTION

The present invention relates to improvements of the waterproof/dustproof structure described in the above Patent Document 1 and is directed to enhance the controllability over the movement of the movable member by means of the liquid contained in the liquid reservoir. More specifically, the objects of the present invention are to suppress vibration of the movable member when it stops moving, to effectively brake the movable member when it is to be stopped, to facilitate the movement of the movable member, and to allow an apparatus including this waterproof/dustproof structure to take a wider range of positional attitudes.

The waterproof/dustproof structure of the present invention includes a stationary member defining a liquid reservoir, a movable member being separated from the stationary member by a gap region and moving without touching the stationary member, in which the gap region defines a boundary between an inside and an outside of an apparatus, and a liquid reservoir is provided in the gap region to shield the inside of the apparatus from the outside by means of the liquid stored in the liquid reservoir.

In a first aspect of the waterproof/dustproof structure of the present invention, a liquid of high viscosity(for example, 100,000 cSt or so) is stored in the liquid reservoir to suppress vibration of the movable member when it stops moving.

The liquid reservoir may contain a magnetic fluid and have a magnet disposed on its bottom to attract the magnetic fluid and thus prevent the magnetic fluid from spilling out of the gap region, thereby suppressing the vibration of the movable member that occurs when it stops moving by means of the magnetic fluid.

In a second aspect of the waterproof/dustproof structure of the present invention, the waterproof/dustproof structure comprises a voltage applying means for applying a voltage to the liquid stored in the liquid reservoir, and the liquid reservoir stores an electroviscous fluid that changes in viscosity depending on the voltage applied by the voltage applying means in order to facilitate the movement of the movable member with its low viscosity and to brake the movement of the movable member with its high viscosity.

In a third aspect of the waterproof/dustproof structure of the present invention, the liquid reservoir is equipped with a liquid supply port for causing the liquid stored therein to flow and a liquid discharge port for causing the liquid supplied to the liquid reservoir to be discharged outside so that the force of a flowing fluid produced by the liquid supplied through the liquid supply port acts on a rotary member.

### BRIEF DESCRIPTION OF THE DRAWINGS

The above and other objects and features of the present invention will become apparent from the following description with reference to the attached drawings, in which:
FIG. 1 is a sectional view showing a labyrinth structure used as a conventional waterproof/dustproof structure.
FIG. 2 is a sectional view showing a basic structure of a waterproof/dustproof structure according to the present invention.
FIG. 3A is a perspective sectional view of a first embodiment in which the waterproof/dustproof structure of the present invention is applied to a rotary shaft mechanism.
FIG. 3B is a vertical sectional view of the first embodiment taken along its axis of rotation.
FIG. 4A is a schematic perspective view of a second embodiment in which the waterproof/dustproof structure of the present invention is applied to a movable mechanism with a higher directional freedom of movement.
FIG. 4B is a vertical sectional view of the second embodiment.
FIG. 5A is a schematic perspective view of a third embodiment in which the waterproof/dustproof structure of the present invention is applied to a movable mechanism.
FIG. 5B is a vertical sectional view of the third embodiment.
FIG. 6 is a perspective view of a fourth embodiment in which the waterproof/dustproof structure of the present invention is applied to a rotary shaft mechanism.
FIG. 7 is a vertical sectional view of a fifth embodiment of the waterproof/dustproof structure of the present invention applied to a rotary shaft mechanism, taken along an axis of rotation.

### DETAILED DESCRIPTION OF THE PREFERRED EMBODIMENTS

A first embodiment of the waterproof/dustproof structure of the present invention, which is applied to a rotary shaft mechanism, will now be described with reference to FIGS. 3A and 3B.

In this embodiment, the movable member is a rotary shaft member 50 supported by a bearing mechanism (not shown) so as to be rotatable about the axis of rotation A-A'. The bearing mechanism is disposed below the section shown in FIGS. 3A and 3B.

This embodiment is characterized in that the liquid reservoir contains a liquid of high viscosity as the liquid for shielding the inside of the apparatus from the outside as shown in FIG. 2.

The rotary shaft member 50 has a downwardly pendant part 51 hanging from its outer circumference, approximately the lower half of which is inserted between an inner wall part 41 and an outer wall part 42 of a stationary member 40. Accordingly, a gap 60 is formed between the inner wall part 41 of the stationary member 40 and the downwardly pendant part 51 of the movable member 50. In an entrance area to the gap 60 as viewed from outside of the apparatus, a liquid reservoir 43 for holding a liquid LQ is defined by the lower sections of the inner and outer wall parts 41, 42. The bottom of the downwardly pendant part 51 of the rotary shaft member 50 is submerged in the liquid LQ.

In this embodiment, the liquid LQ is a liquid of high viscosity having, for example, 100,000 cSt or so, such as a highly viscous silicone oil.

The rotary shaft member 50 rotates about the axis A-A' with the bottom of its downwardly pendant part 51 being submerged in the liquid LQ in the liquid reservoir 43. Accordingly, the liquid LQ stored in the liquid reservoir 43 functions as a lid for sealing the gap 60 to shield the inside of the apparatus from its outside and thus prevent the entry of mist, dust, and other foreign matter into the apparatus.

With its high viscosity, the liquid LQ provides a higher controllability over the movement of the rotary shaft member 50 by suppressing the vibration of the rotary shaft member 50 that occurs when it stops rotating and also by breaking the rotary shaft member 50.

Furthermore, this embodiment allows for a wider gap 60, so the stationary member 40 and the rotary shaft member 50 can be machined and assembled with lower tolerances.

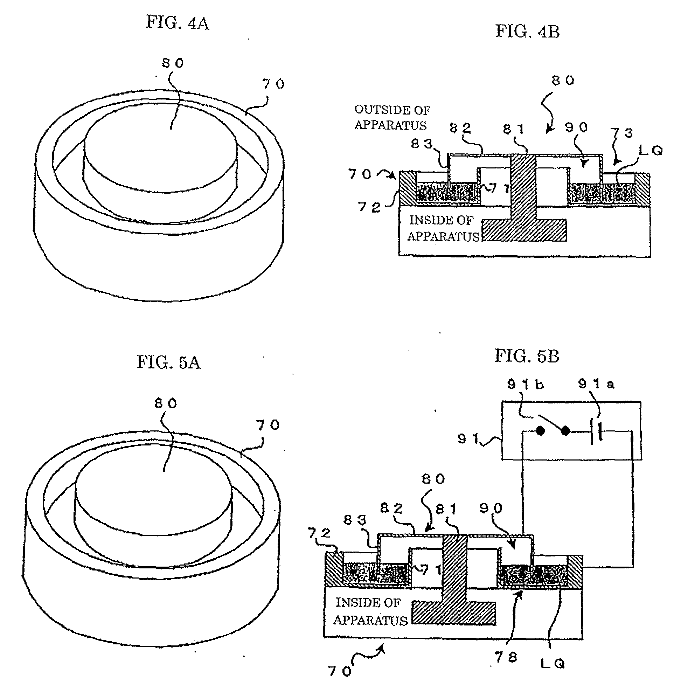

A second embodiment of the waterproof/dustproof structure of the present invention, which is applied to a movable mechanism with a high degree of freedom in direction of movement, will now be described with reference to FIGS. 4A and 4B.

In this embodiment, a movable member 80 can floatingly move in the vertical, horizontal, and rotational directions. The movable member 80 has a columnar part 81 extending toward the inside of the apparatus, a roof part 82, and a downwardly pendant part 83 hanging from the outer circumference of the roof part 82. Approximately the lower half of the downwardly pendant part 83 is inserted between inner and outer wall parts 71, 72 of a stationary member 70. Accordingly, a gap 90 is formed between the inner wall part 71 of the stationary member 70 and the downwardly pendant part 83 of the movable member 80. A liquid reservoir 73 is defined by the lower sections of the inner and outer wall parts 71, 72 and a liquid LQ of high viscosity such as a silicone oil in the gap 90 is stored therein. With the bottom of the downwardly pendant part 83 being submerged in the liquid LQ, the movable member 80 moves in the vertical, horizontal, and rotational directions, as well as in combined directions of any of these.

In the second embodiment as well, the liquid LQ stored in the liquid reservoir 73 prevents the entry of mist, dust, and other foreign matter into the apparatus and the viscosity of the liquid LQ suppresses the vibration of the movable member 80 that occurs when it stops moving. This liquid LQ also has a damping effect, thereby providing an enhanced controllability over the movement of the rotary shaft member 50.

Furthermore, this embodiment allows for a wider gap 90 and allows the stationary member 70 and the movable member 80 to be machined and assembled with lower tolerances.

A third embodiment of the waterproof/dustproof structure of the present invention, which is applied to a movable mechanism, will now be described with reference to FIGS. 5A and 5B.

In the third embodiment, the movable mechanism is the same as that in the second embodiment shown in FIGS. 4A and 4B but the liquid LQ stored in the liquid reservoir 73 is an electroviscous fluid (ER fluid) and a voltage applying means 91 is provided to produce a potential difference between the stationary member 70 and the movable member 80. Examples of electroviscous fluid include "Homogeneous ER Fluid Type A" from ER Tec Corporation. The component members equivalent to those in the second embodiment are denoted by the same reference numerals.

The voltage applying means 91 is connected between the stationary member 70 and the movable member 80 and includes a power supply 91a and a switch 91b for applying the voltage of the power supply 91a to the stationary member 70 and the movable member 80. Turning on the switch 92b and thus applying the voltage between the stationary member 70 and the movable member 80 causes the viscosity of the electroviscous fluid LQ to change from its normal level when no voltage is applied. The viscosity of the electroviscous fluid LQ is kept low when the movable member 80 is moving and is changed to high when it is necessary to brake the movable member 80 and suppress its vibration that occurs when it stops moving.

Other functions and effects are the same as in the second embodiment.

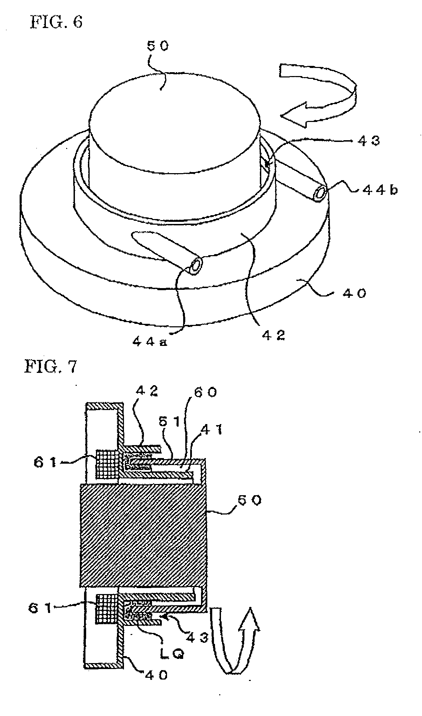

A fourth embodiment of the waterproof/dustproof structure of the present invention, which is applied to a rotary shaft mechanism, will now be described with reference to FIG. 6.

In the fourth embodiment, a rotary shaft mechanism includes the rotary shaft member 50 and the stationary member 40 similarly to the first embodiment, but the outer wall part 42 of the stationary member 40 is equipped with a liquid supply port 44a and a liquid discharge port 44b to supply and discharge, respectively, a liquid to and from the liquid reservoir formed between the inner and outer wall parts 41, 42 of the stationary member 40, and the liquid LQ stored in the liquid reservoir 43 is a liquid not so highly viscous, such as a machining fluid or a working fluid used by a hydraulic bearing as in the invention described in Patent Document 1. The component members equivalent to those in the first embodiment are denoted by the same reference numerals.

To rotate the rotary shaft member 50, a pressure is applied to the liquid LQ through the liquid supply port 44a to supply the liquid LQ into the liquid reservoir 43 and discharge it through the liquid discharge port 44b. This causes the liquid LQ to flow inside the liquid reservoir 43 and thus causes the rotary shaft member 50 to rotate. The liquid LQ thus supplied may be used as a driving force for rotating the rotary shaft member 50, or another driving force may be provided for rotating the rotary shaft member 50 and the flow of the liquid LQ may be used as an auxiliary force. To efficiently transmit the force of the flowing liquid, the rotary shaft member 50 may be equipped with turbine-type blades.

To inversely rotate the rotary shaft member 50, the liquid supply port 44a and the liquid discharge port 44b can be used in reverse, i.e., by applying a pressure through the liquid discharge port 44b to supply the liquid LQ into the liquid reservoir 43 and discharge it through the liquid supply port 44a.

A fifth embodiment of the waterproof/dustproof structure of the present invention, which is applied to a rotary shaft mechanism, will now be described with reference to FIG. 7.

In the fifth embodiment, the liquid LQ is a magnetic fluid (Magnetic Fluid A-200 from Sigma Hi-Chemical Inc., for example) and a magnet is disposed near the bottom of the liquid reservoir of the stationary member to hold the magnetic fluid. In this embodiment, the rotary shaft mechanism is the same as that in the first embodiment and the same component members are denoted by the same reference numerals as in the first embodiment.

The liquid reservoir 43 holds the magnetic fluid LQ and the magnet is disposed on its bottom. In this embodiment, a magnet 61 is disposed on the outer surface of the stationary member 40 corresponding to the bottom of the liquid reservoir 43. Attracted by the magnet 61, the magnetic fluid LQ does not spill out of the liquid reservoir 43 even when an apparatus including this rotary shaft mechanism is inclined so that the opening (through which the downwardly pendant part 51 of the rotary shaft member 50 is inserted) of the liquid reservoir 43 that normally faces upward is turned sideward as shown in FIG. 7, thereby suppressing vibrations of the movable member by the viscosity of the fluid as in the case of the first embodiment.

With this, the apparatus including the waterproof/dustproof structure in the fifth embodiment can take a wider range of positional attitudes

## Claims

1. A waterproof/dustproof structure including a stationary member defining a liquid reservoir, a movable member being separated from the stationary member by a gap region and moving without touching the stationary member, in which the gap region defines a boundary between an inside and an outside of an apparatus, and a liquid reservoir is provided in the gap region to shield the inside of the apparatus from the outside by means of the liquid stored in the liquid reservoir;
wherein a liquid of high viscosity is stored in the liquid reservoir to suppress vibration of the movable member when it stops moving.

2. The waterproof/dustproof structure according to claim 1, wherein the liquid reservoir contains a magnetic fluid and has a magnet disposed on its bottom to attract the magnetic fluid and thus prevent the magnetic fluid from spilling out of the gap region, thereby suppressing the vibration of the movable member that occurs when it stops moving by means of the magnetic fluid.

3. A waterproof/dustproof structure including a stationary member defining a liquid reservoir, a movable member being separated from the stationary member by a gap region and moving without touching the stationary member, in which the gap region defines a boundary between an inside and an outside of an apparatus, and a liquid reservoir is provided in the gap region to shield the inside of the apparatus from the outside by means of the liquid stored in the liquid reservoir, said waterproof/dustproof structure comprising:
a voltage applying means for applying a voltage to the liquid stored in the liquid reservoir;
wherein the liquid reservoir stores an electroviscous fluid that changes in viscosity depending on the voltage applied by the voltage applying means in order to facilitate the movement of the movable member with its low viscosity and to brake the movement of the movable member with its high viscosity.

4. A waterproof/dustproof structure including a stationary member defining a liquid reservoir, a movable member being separated from the stationary member by a gap region and moving without touching the stationary member, in which the gap region defines a boundary between an inside and an outside of an apparatus, and a liquid reservoir is provided in the gap region to shield the inside of the apparatus from the outside by means of the liquid stored in the liquid reservoir;
wherein the liquid reservoir is equipped with a liquid supply port for causing the liquid stored therein to flow and a liquid discharge port for causing the liquid supplied to the liquid reservoir to be discharged outside so that the force of a flowing fluid produced by the liquid supplied through the liquid supply port acts on a rotary member.
